# EUROPEAN PATENT SPECIFICATION

(11) **EP 0 769 436 B1**
(45) Date of publication and mention of the grant of the patent: **23.08.2000**
(21) Application number: 96116752.5
(22) Date of filing: 18.10.1996
(51) Int. Cl.: B60S 1/24

(54) **A windscreen-wiper device for motor vehicles**
Kraftfahrzeug-Scheibenwischer
Dispositif d'essuie-glace pour véhicules automobiles

(30) Priority: 20.10.1995 IT TO950854
(43) Date of publication of application: 23.04.1997
(73) Proprietor: Denso Manufacturing Italia S.p.A., 20121 Milano (IT)
(72) Inventor: Priori, Mario, 66020 Torino di Sangro (CHIETI) (IT)
(74) Representative: Quinterno, Giuseppe

(56) References cited:
- EP-A- 0 585 010
- US-A- 4 672 709
- US-A- 4 765 018
- US-A- 5 005 249
- BOSCH: 'Automotive Handbook', ROBERT BOSCH GMBH, STUTTGART, DE * page 602 *

## Description

The present invention concerns a windscreen-wiper device for a motor vehicle, of the kind defined in the preamble of Claim 1.

A windscreen-wiper device of this ki is disclosed in Automotive Handbook, Robert Bosch GmbH Postfach 50, D-7000 Stuttgart 1, 2^{nd} Edition, 1986, pp. 602-603.

When using a motor vehicle in rain or snow, the effectiveness of the windscreen-wiper device associated with the windscreen depends on the frequency of oscillation of the blade-carrying arms. A high frequency of oscillation, if not absolutely necessary, can be annoying. Windscreen-wiper devices usually have control devices which allow the frequency of oscillation of the blade-carrying arms to be varied as necessary.

In a prior art windscreen-wiper device having two arms of the kind defined above, the wiper blades associated with said arms oscillate over respective areas of the windscreen surface which overlap only to a minimum extent. In particular, the area in front of the driver's seat is substantially wiped only by the blade associated with one of the two arms of the windscreen-wiper device.

The object of the present invention is to provide a windscreen-wiper device for motor vehicles which, in particularly severe conditions of use, give an overall improvement in the effectiveness with which the portion of the windscreen in front of the driver's seat of the motor vehicle is wiped.

This and other objects are achieved by the invention by a windscreen-wiper device having the features defined in Claim 1.

Further characteristics and advantages of the invention will become clear from the following detailed description, given purely by way of non-limitative example, with reference to the accompanying drawings, in which:
Figure 1 is a schematic front view of a motor vehicle windscreen provided with a prior art windscreen-device having two arms;
Figure 2 is a schematic front view of a windscreen provided with a windscreen-wiper according to the invention;
Figure 3 is a view in partial section of part of a windscreen-wiper device according to the invention, showing the electric motor and part of the system which transmits the motion to the two arms;
Figure 4 is a sectional view of Figure 3 taken on the line IV-IV;
Figure 5 is a partially exploded and sectional perspective view of the control unit of a windscreen-wiper according to the invention; and
Figures 6a, 6b and 6c are schematic illustrations of three operative conditions assumed by a transmission system in a windscreen-wiper according to the invention.

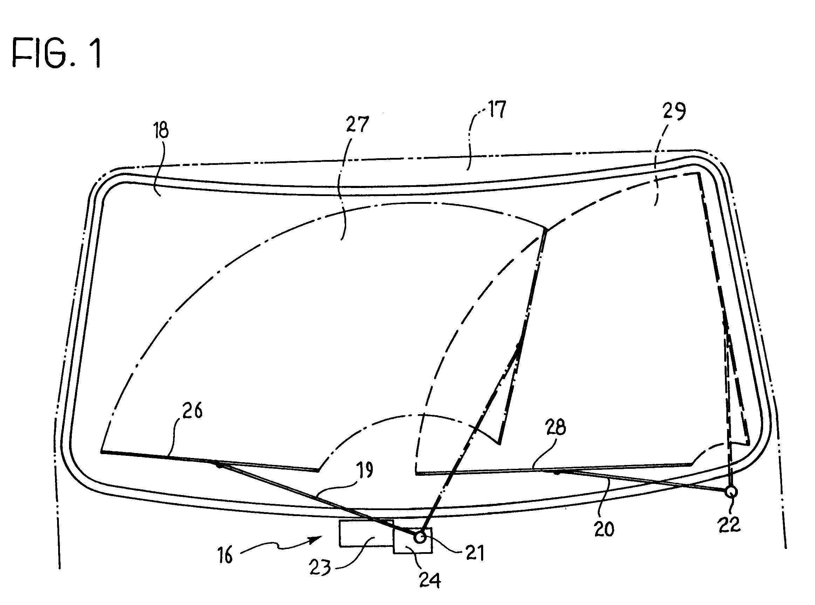

Figure 1 shows a windscreen-wiper device of known type, indicated 16, associated with the windscreen 18 of a motor vehicle 17. The windscreen wiper device 16 is of the type having two blade-carrying arms 19 and 20 mounted on two arm-carrying pivot pins 21 and 22, and an electric control motor 23 whose output shaft is mechanically coupled with the pivot pins 21 and 22 in a known way which is not shown.

The arms 19 and 20 are mounted on the pivot pins 21 and 22 in a known way.

The electric motor 23 is connectable to the motor vehicle battery which is not shown in the drawings, and position-control means 38, 24 are provided to stop the motor 23 when the arms 19 and 20 reach a predetermined rest position.

The arm-carrying pivot pins 21 and 22 are able to oscillate angularly, in a phased manner, in the two senses between a rest position and an end position.

In the case of a left-hand drive vehicle, the wiper or blade 26 of the arm 19 wipes the field of vision indicated 27 in front of the front passenger's seat, and the wiper or blade 28 of the arm 20 wipes the area indicated 29 directly in front of the driver's seat.The rest positions of the pivot pins 21 and 22 correspond to a substantially horizontal arrangement of the blades 26 and 28 out of the direct driver's field of vision.

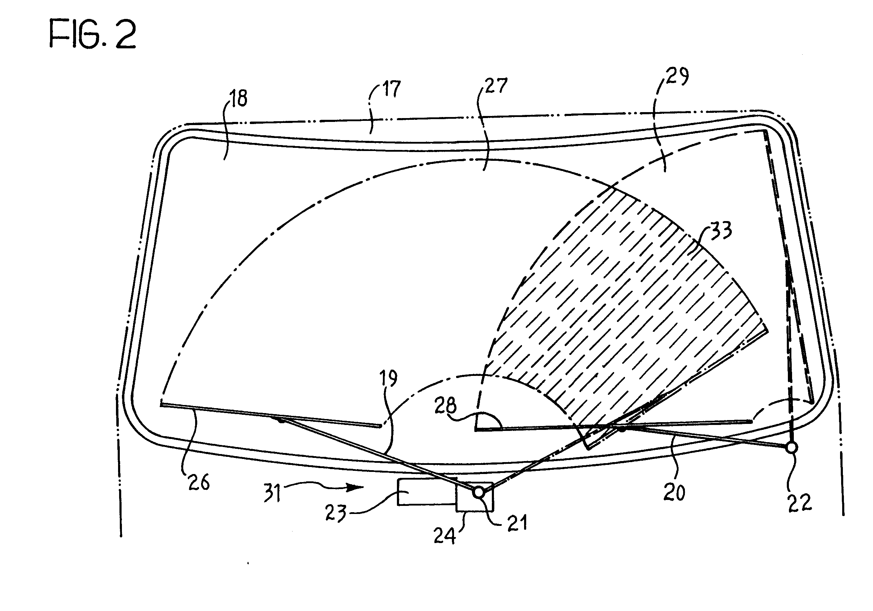

With reference to Figures 2 to 6, a windscreen-wiper device according to the invention is indicated 31. This device, as well as the previously-described parts of the known device 16, includes control means 32 which can be selectively activated to vary the size of the wiping area 27 of the blade 26, in such a way as to obtain a smaller wiping area 27 as shown in Figure 1, or an enlarged wiping area 27 as shown in Figure 2 in which the intersection of the areas 27 and 29 wiped by the two blades 26 and 28 is indicated 33. The area 33, which is in front of the driver's seat, is clearly wiped more effectively as it is wiped both by the blade 28 on the arm 20 as well as the blade 26 on the arm 19.

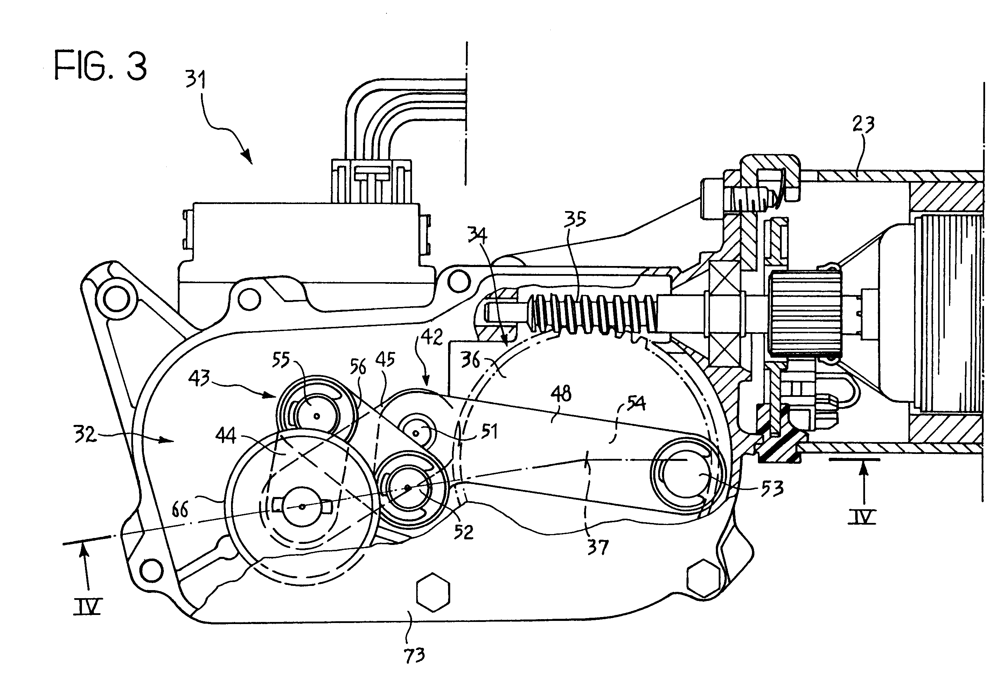

As can be seen in Figure 3, a reduction gear 34 is coupled with the electric motor 23, including a worm screw 35 connected to the output shaft of the motor and a gear wheel with helical teeth 36 connected to a pin 37. The reference numeral 38 indicates position-sensor devices of known type, for detecting at least one reference position of the gear wheel 36 for controlling the position.

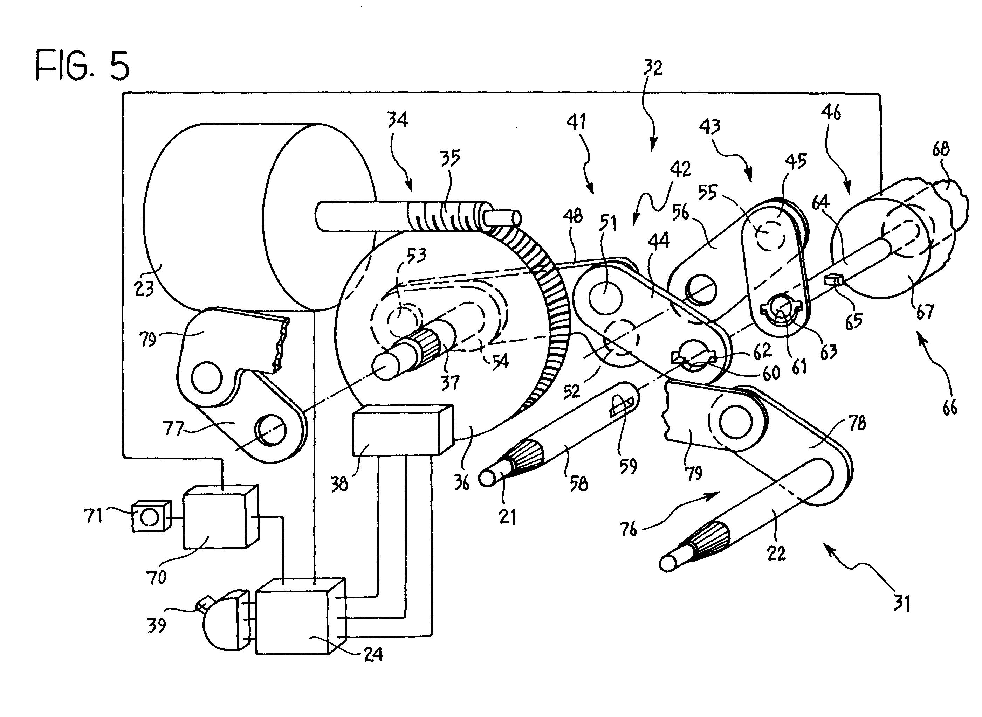

The rotational speed of the motor 23 and/or its intermittence period can be varied, for example, in a known way by means of a selector 39 (Figure 5) close to the driver's seat.

The control unit of the windscreen-wiper device 31 (Figures 3, 4 and 5) includes a mechanism 41 which couples the reduction gear 34 with the arm-carrying pivot pin 21. This mechanism includes two drive linkages 42 and 43. A switching device 32 is able selectively to operate either of the drive linkages 42 or 43 to oscillate the arm-carrying pivot pin 21.

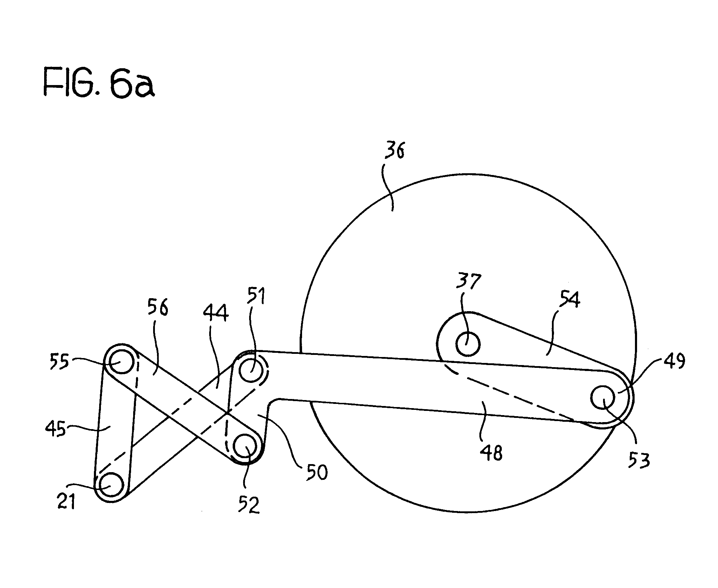

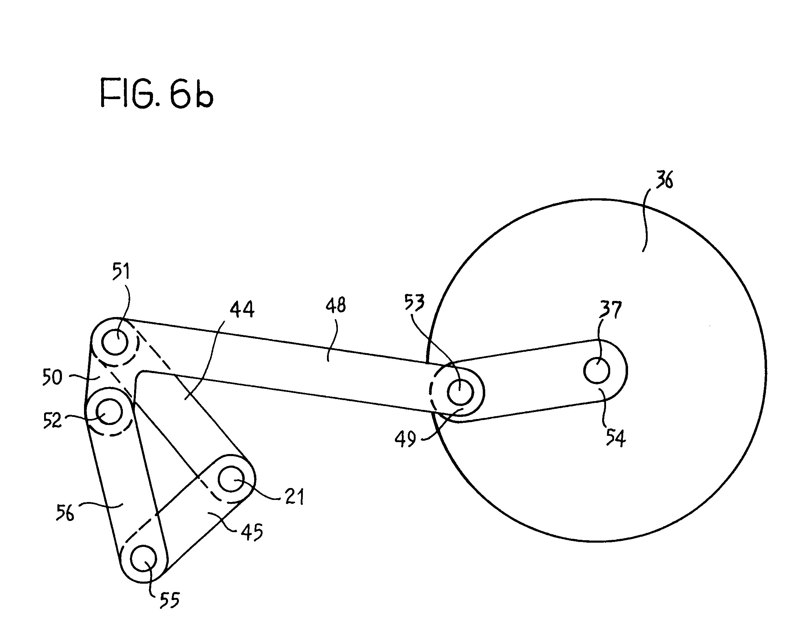

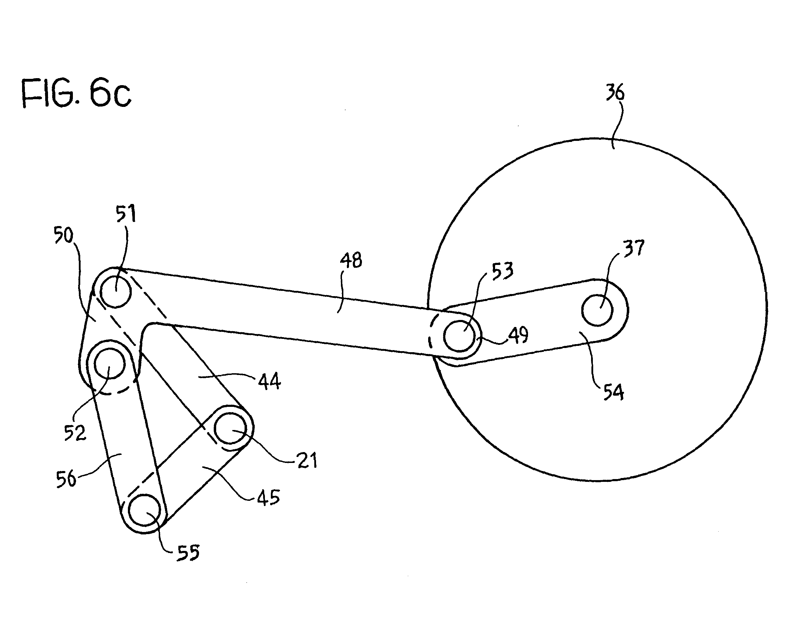

The drive linkages 42 and 43 include two respective terminal members 44 and 45, each being capable of turning with respect to the arm-carrying pivot pin 21. The switching device 32 includes an actuator 46 able selectively to rotate the arm-carrying pivot pin 21 together with either the terminal member 44 or the terminal member 45, starting at a common rest position (Figure 6a) corresponding to the rest condition of the motor 23.

In particular, the drive linkages 42 and 43 are able to determine different end positions for the terminal members 44 and 45 of the aforesaid drive linkages.

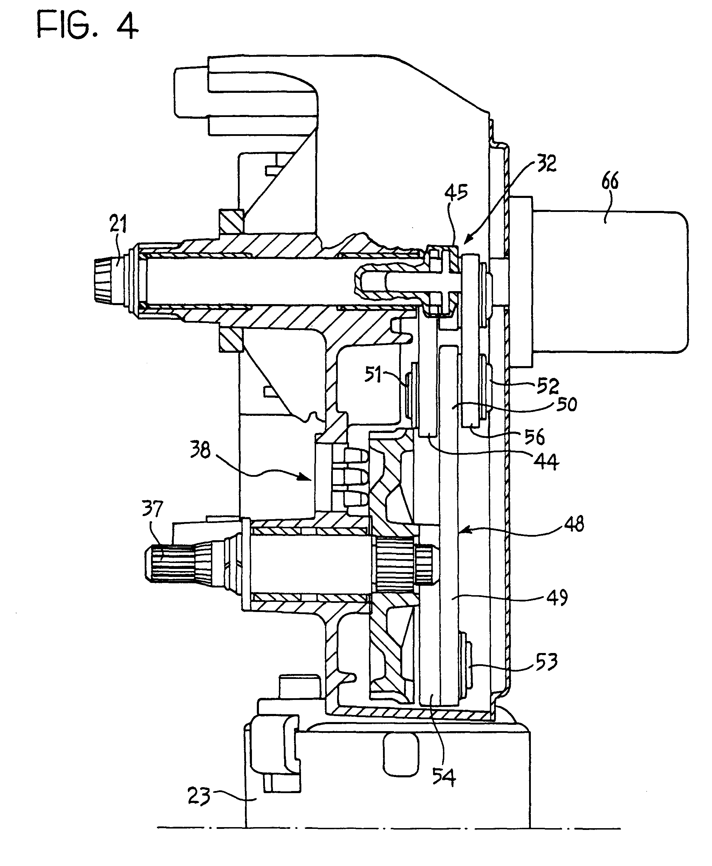

The mechanism 41 includes a connecting rod 48 common to the two drive linkages 42 and 43. One end 49 of the connecting rod 48 is pivoted on a pivot 53 of a crank 54 which, in its turn, is fixed for rotation with the pin 37 of the reduction gear 34 (see Figure 4).

The other end 50 of the connecting rod 48, opposite the end 49, is L-shape. Two pivots 51 and 52 which project from the opposite faces of the connecting rod 48 (see Figures 4 and 5) are fixed to this end 50. In the drive linkage 42, one end of the terminal member 44 is pivoted on the pivot 51 of the connecting rod 48.

In the drive linkage 43, one end of the terminal member 45 carries a pivot 55 upon which is pivoted an end of a link 56, whose other end is pivoted on the pivot 52 of the connecting rod 48 (Figure 5).

The drive linkage 42 is of the crank, connecting rod and end link type (54, 48, 44). In use, a complete rotation of the helically toothed gear 36 corresponds to an angle of oscillation of the arm-carrying pivot pin 21 of (for example) approximately 90° and a corresponding wiping angle of the wiper or blade 26. The drive linkage 43 is, on the other hand, of the crank, connecting rod, intermediate link and end link type (54, 48, 56, 45). The connection formed by the intermediate link 56 between the pivot pin 52 and the terminal member 45 is such that the relative rotation of the L-shape end 50 and the terminal member 44 gives rise to a further rotation of the terminal member 45 with respect to the member 44. An even greater angle of oscillation is therefore obtained for the terminal member 45.

In particular, the drive linkage 43 may be considered as being formed from two crank mechanisms in series. The first such crank mechanism comprises the crank 54, the connecting rod 48 and the pivoted end link 44, while the second crank mechanism comprises the L-shape portion 50 of the connecting rod 48, acting as a crank, the intermediate link 56 acting as a connecting rod, and the terminal link 45. The rotation of this terminal link 45 corresponds to the combination of the rotation of the terminal link 44 caused by the first crank mechanism, with the rotation of the terminal link 45 with respect to the shaft 44, caused by the second crank mechanism.

By means of a suitable distance between the pivots 51 and 52 of the L-shape portion 50 and the length of the terminal link 45, the angle of oscillation of the link 45 may be freely determined. In the example described, when the linkage 43 is operative, a 360° rotation of the helically toothed wheel 36 may correspond, for example, to an oscillation of approximately 140° of the arm-carrying pivot pin 21 and an identical wiping angle of the blade-carrying arm 26. The connection with the terminal link 44 or the terminal link 45 is obtained by the arm-carrying pivot pin 21 on the side axially opposite that on which the arm 19 is mounted extending into a sleeve 58 having two longitudinal channels 59 on diametrically opposite sides (Figure 5). The terminal links 44 and 45 are constituted by two elongate plates of different length having a respective circular opening 60, 61 at one end into which the sleeve 58 extends.

The terminal links 44 and 45 are mutually juxtaposed and have respective pairs of opposite radial notches 62 and 63 in the openings 60 and 61. The notches 62 and 63 are able to align themselves with each other and with the channels 59 in the sleeve 58 when the shafts 44 and 45 and the sleeve 58 are in a reference position.

A rod 64 projecting from an actuator device 46 is guided for axial sliding movement in the sleeve 58, and has a bilateral key 65 axially slidably engaged in the channels 59 of this sleeve. The arms of the key 65 project outside the sleeve 58 and, in dependence on the axial position of the rod 64, can engage alternatively in the pair of notches 62 in the terminal link 44, or the pair of notches 63 in the link 45.

When the arms of the key 65 engage in the notches 62, the link 44 is rigidly connected for rotation with the sleeve 58 while the other terminal link 45 is idle. Conversely, when the arms of the key 65 engage in the notches 63, the link 45 is connected for rotation with the sleeve 58 while the other link 44 is idle with respect to the sleeve.

The actuator 46 includes an electromagnet 66 having a fixed structure 67 and an axially movable core 68 which is free to turn with respect to the said structure. The core 68 can translate between two positions, a resting and a working position respectively, corresponding to the de-excited and excited conditions of the electromagnet. The core 68 is part of the rod 64, and is mounted coaxial with the sleeve 58 on the opposite side to the arm-carrying pivot pin 21.

When the electromagnet 66 is de-excited, the rod 64 couples the terminal link 44 for rotation with the arm-carrying pivot pin 21. When the electromagnet is excited, the arm-carrying pivot pin 21 is instead coupled for rotation with the terminal link 45.

Whether the electromagnet is in the excited or de-excited state, the movable core 68 oscillates angularly within the structure 67 in synchronism with the oscillations of the arm-carrying pivot pin 21. A control circuit 70 (Figure 5) is provided for exciting the electromagnet 66, connected to a push-button control device 71 which is manually operable by the driver and controlled by the position-control device 24.

The circuit 70 is able to cause the change in state of the electromagnet 66 when the output shaft of the motor 23 reaches a predetermined angular position. This allows the axial movement of the rod 64 with the key 65, even in the course of rotation, but only when the notches 62 and 63 in the terminal links 44 and 45 are aligned with each other and with the axial channels in the sleeve 58.

The circuit 70 may include a (monostable) timing circuit for de-exciting the electromagnet 66 after a predetermined period of time. Alternatively, it may include a bistable timing circuit so that the electromagnet 66 can be de-excited by a second operation of the push-button control device 71.

The mechanism 41, the reduction gear 34 and the position sensor 38 are advantageously contained in a box 73 (Figure 3) outside which are mounted the motor 23 and the electromagnet 66. The box 73 is also the support structure for the arm-carrying pivot pin 21 and for the output pin 37 of the reduction gear 34 which both project from a side of the box.

The box 73, the motor 23 and the electromagnet 66 form a single unit 74 which is mountable in a known way below the windscreen 18 on the motor vehicle 17.

The blade 28 on the driver's side is moved by a second linkage, indicated 76 in Figure 5, including a crank 77 coupled for rotation with the pin 37 of the reduction gear 34, a terminal link 78 connected for rotation with the arm-carrying pivot pin 22 and a connecting rod 79 interposed between the crank 77 and the terminal link 78. The angle of oscillation of the blade-carrying arm 20 for wiping the area 29 directly in front of the driver's seat defined by this linkage is, for example, approximately 80°.

When the electromagnet 66 is de-excited, the arm-carrying pivot pin 21 is coupled to the drive linkage 42 of the mechanism 41 and the operation of the windscreen wiper device 31 according to the invention corresponds to that of the known prior art devices (Figure 1). On operation of the switch 32, the electric motor 23 is rotated and causes, by means of the linkages 42 and 76, respective oscillations of, for example, approximately 90° and 80° of the arms 19 and 20. The areas 27 and 29 wiped by the blades 26 and 28 have a small area of overlap or intersection, close to the central part of the windscreen 18, substantially out of the driver's direct field of vision.

When the driver requires more effective wiping of the windscreen, he operates the manual control device 71. This prepares the control circuit 70 for controlling the electromagnet 66. The circuit 70 thus provides the current which excites the electromagnet only when it receives a signal from the position sensors 38 indicating that the mechanism 41 is in the position in which the notches 62 and 63 in the links 44 and 45 are aligned with each other and with the channels 59 in the sleeve 58. The core 68 is then moved into its working position, causing displacement of the rod 64 and engagement of the key 65 so as to couple the link 45 for rotation with the sleeve 58, thereby operatively coupling the arm-carrying pivot pin 21 with the drive linkage 43.

The rotation of the motor 23 now transmits an angle of oscillation of (for example) approximately 140° to the blade 26, leaving the oscillation of the blade 28 unchanged, such that - as an overlap - an area 33 in front of the driver which is wiped better is obtained. The blade 28 and blade 26 wipe the area 33, with a net improvement in visibility over an angle of (for example) approximately 50°.

The drive linkage 43 and the crank mechanism 76 ensure a synchronised movement of the two blades 26 and 28 with no risk of interference in their movement and without limiting the other controls of the windscreen wiper device 31, such as speed and/or frequency variation and possible intermittent mode of operation.

A subsequent operation of the push-button 71, or an intervention of the timing device, de-excites the electromagnet 66 in the alignment position of the mechanism 41. The terminal link 45 becomes idle again, and the terminal link 44 is coupled to the arm-carrying blade 21 such that the drive linkage 42 is operative again.

Naturally, the principle of the invention remaining the same, the embodiments and constructional details may be widely varied with respect to that described and illustrated purely by way of non-limitative example, without departing from the scope of the present invention as defined in the attached claims.

## Claims

1. A windscreen-wiper device (31) for a motor vehicle (17) including first and second rotatable arms (20, 19) carrying respective windscreen wiper blades (28, 26) for wiping respective areas (29, 27) of the windscreen (18) of the motor vehicle, situated in front of the driver's seat and the adjacent passenger's seat respectively; and electric motor means (23) coupled with each of the said arms (20, 19) by a first linkage system (76) and a second linkage system (41) respectively; characterised in that the said second linkage system (41) includes two drive linkages (42 and 43) for coupling the electric motor means (23) with the second rotatable arm (19) in either a first or a second condition in which said drive linkages (42 and 43) cause the oscillation of the wiper blade (26) of the said second arm (19) over a first and second angular area (Figure 1; Figure 2) having a respectively minimum and maximum overlap with the area (29) wiped by the blade (28) of the first arm (20), and that a switching device (32) is able selectively to operate either of the drive linkages (42, 43) to oscillate the second rotatable arm (19) in the respective first or second condition.

2. A windscreen-wiper device according to Claim 1, characterised in that it further includes position-sensor means (38) suitable to detect the presence of the said arms (20, 19) at a predetermined reference position, and to allow the drive linkages (42, 43) to move from the first to the second condition and vice versa when the said arms (20, 19) are in the said reference position.

3. A windscreen-wiper device according to Claim 1 or Claim 2, characterised in that the said switching device (32) is adapted to operate either of the drive linkages (42, 43) through an actuator device (46).

4. A windscreen-wiper device according to Claim 3 in which the said motor means (23) comprise an electric motor (23) and in which the second arm (19) is connected to an arm-carrying pivot pin (21) rotatable about a fixed axis and coupled to the output shaft of the electric motor (23) by the said second linkage system (41); characterised in that the said first and second drive linkages (42, 43) comprise respective crank mechanisms including respective pluralities of mutually pivoted transmission members (54, 48, 44; 54, 48, 56, 45) and whose terminal transmission members (44, 45) are selectively coupleable, idly or connected for rotation, to the arm-carrying pivot pin (21) of the second arm (19) by means of the said actuator device (46); the actuator device (46) being able to assume selectively a first and second condition in which the said arm-carrying pivot pin (21) is connected to the terminal transmission member (44; 45) of the first or second drive linkage (43; 42) respectively and at the same time the coupling between said arm-carrying pivot pin (21) and the terminal member (45; 44) of the second and the first drive linkages (43; 42) respectively, is rendered idle.

5. A windscreen-wiper device according to Claim 4, characterised in that the said terminal transmission members (44; 45) of the first and second drive linkages (42; 43) are links having respective apertures or openings (60; 61) at one end through which the pivot pin (21) which carries the said second arm (19) extends, and the actuator (46) includes an engagement member (64) rotatable with the said pivot pin (21) and longitudinally translatable in an axial cavity in the said pivot pin (21, 58) between a first and second position in which it is able to couple the said pivot pin (21) for rotation with the terminal member (44; 45) of the first or second drive linkage (42; 43) respectively.

6. A windscreen-wiper device according to Claim 5, characterised in that the said engagement member (64) has at least one radial projection (65) which extends with axial play through a longitudinal slot (59) in the said pivot pin (21, 58) and is selectively engageable in a corresponding notch (62; 63) in the end opening (60; 61) of the terminal member (44; 45) of the first or second drive linkage (42; 43) respectively.

7. A windscreen-wiper device according to Claim 6, characterised in that the said actuator device (46) includes an electromagnet (66) with a movable core (68) to which the said engagement member (64) is connected.

8. A windscreen-wiper device according to any one of preceding Claims 4 to 7, characterised in that the said first drive linkage (42) comprises a crank (54) rotatable by the said electric motor (23), a connecting rod (48) having a first end pivoted to the crank (54), and a first terminal member (44) with one end pivoted to the connecting rod (48) and the other end coupled to the pivot pin (21) which carries the said second arm (19); and in that the said second drive linkage (43) comprises the said crank (54) and the said connecting rod (48), and a link (56) pivoted between said connecting rod (48) and one end of a second terminal member (45) whose other end is coupled to the pivot pin (21) which carries the said second arm (19).

9. A windscreen-wiper device according to Claim 8, characterised in that the said link (56) of the second drive linkage (43) is pivoted to the said connecting rod (48) at a different point (52) from the pivot point (51) of the said connecting rod (48) and the terminal transmission member (44) of the first drive linkage (42).

## Patentansprüche

1. Scheibenwischeranlage (31) für ein Kraftfahrzeug (17) mit einem ersten und einem zweiten schwenkbaren Arm (20, 19), die jeweils ein Scheibenwischerblatt (28, 26) zum Wischen der jeweiligen vor dem Fahrersitz bzw. dem daneben befindlichen Beifahrersitz vorgesehenen Fläche (29, 27) der Windschutzscheibe (18) des Kraftfahrzeugs tragen, und Elektromotoreinrichtungen (23), die über ein erstes Verbindungssystem (76) bzw. ein zweites Verbindungssystem (41) mit jedem der Arme (20, 19) verbunden ist, dadurch gekennzeichnet, dass das zweite Verbindungssystem (41) zwei Antriebsverbindungen (42 und 43) zur Kopplung der Elektromotoreinrichtungen (23) mit dem zweiten schwenkbaren Arm (19) in einem ersten oder in einem zweiten Zustand aufweist, in dem die Antriebsverbindungen (42 und 43) eine Hin- und Herbewegung des Wischerblatts (26) des zweiten Arms (19) über eine erste und eine zweite Winkelfläche (Fig. 1; Fig. 2) mit einer entsprechenden minimalen und maximalen Überlappung mit der vom Blatt (28) des ersten Arms (20) bestrichenen Fläche (29) bewirken, und dass eine Schalteinrichtung (32) zur Hin- und Herbewegung des zweiten schwenkbaren Arms (19) in der entsprechenden ersten oder zweiten Bedingung selektiv eine der Antriebsverbindungen (42, 43) betätigen kann.

2. Scheibenwischeranlage nach Anspruch 1, dadurch gekennzeichnet, dass sie weiters Positionssensoren (38) aufweist, die dazu geeignet sind, die Anwesenheit der Arme (10, 19) in einer vorbestimmten Referenzposition zu detektieren und die Antriebsverbindungen (42, 43) aus dem ersten in den zweiten Zustand und umgekehrt bewegen zu lassen, wenn sich die Arme (20, 19) in besagter Referenzposition befinden.

3. Scheibenwischeranlage nach Anspruch 1 oder 2, dadurch gekennzeichnet, dass die Schalteinrichtung (32) über eine Antriebseinrichtung (46) eine der Antriebsverbindungen (42, 43) betätigen kann.

4. Scheibenwischeranlage nach Anspruch 3, bei welcher die Motoreinrichtungen (23) einen Elektromotor (23) umfassen und der zweite Arm (19) mit einem armtragenden Schwenkzapfen (21) verbunden ist, der um eine feststehende Achse drehbar und über das zweite Verbindungssystem (41) mit der Abtriebswelle des Elektromotors (23) gekoppelt ist, dadurch gekennzeichnet, dass die erste und die zweite Antriebsverbindung (42, 43) entsprechende Kurbelmechanismen mit einer entsprechenden Mehrzahl von gegenseitig verschwenkbaren Übertragungsorganen (54, 48, 44; 54, 48, 56, 45) aufweisen, deren End-Übertragungsorgane (44, 45) unwirksam oder in Drehverbindung mittels der zweiten Antriebseinrichtung (46) selektiv mit dem armtragenden Schwenkzapfen (21) des zweiten Arms (19) koppelbar sind, wobei die Antriebseinrichtung (46) selektiv einen ersten und einen zweiten Zustand einnehmen kann, in dem der armtragende Schwenkzapfen (21) mit dem End-Übertragungsorgan (44; 45) der ersten bzw. der zweiten Antriebsverbindung (43; 42) verbunden ist und gleichzeitig die Kopplung zwischen dem armtragenden Schwenkzapfen (21) und dem Endorgan (45; 44) der zweiten bzw. der ersten Antriebsverbindung (43; 42) unwirksam gemacht wird.

5. Scheibenwischeranlage nach Anspruch 4, dadurch gekennzeichnet, dass die End-Übertragungsorgane (44; 45) der ersten und der zweiten Antriebsverbindung (42; 43) Schwingen mit entsprechenden Löchern oder Öffnungen (60; 61) an einem Ende sind, durch welche sich der den zweiten Arm (19) tragende Schwenkzapfen (21) erstreckt, und der Antrieb (46) ein mit dem Schwenkzapfen (21) drehbares Eingriffselement (64) aufweist, das in einem axialen Hohlraum in dem Schwenkzapfen (21, 58) zwischen einer ersten und einer zweiten Position, in der es den Schwenkzapfen (21) zur Rotation mit dem Endorgan (44; 45) der ersten bzw. der zweiten Antriebsverbindung (42; 43) koppeln kann, längsverschieblich ist.

6. Scheibenwischeranlage nach Anspruch 5, dadurch gekennzeichnet, dass das zweite Eingriffselement (64) mindestens einen radialen Vorsprung (65) aufweist, der sich mit axialem Spiel durch einen Längsschlitz (59) in dem Schwenkzapfen (21, 58) erstreckt und selektiv in einer entsprechenden Kerbe (62; 63) in der Endöffnung (60; 61) des Endorgans (44; 45) der ersten bzw. der zweiten Antriebsverbindung (42; 43) in Eingriff kommen kann.

7. Scheibenwischeranlage nach Anspruch 6, dadurch gekennzeichnet, dass die zweite Antriebseinrichtung (46) einen Elektromagnet (66) mit einem beweglichen Kern (68) enthält, mit dem das Eingriffselement (64) verbunden ist.

8. Scheibenwischeranlage nach einem der vorhergehenden Ansprüche 4 bis 7, dadurch gekennzeichnet, dass die erste Antriebsverbindung (42) eine durch den Elektromotor (23) drehbare Kurbel (54), eine Verbindungsstange (48) mit einem ersten, zur Kurbel (54) verschwenkten Ende und ein erstes Endorgan (44), dessen eines Ende zur Verbindungsstange (48) verschwenkt und dessen anderes Ende mit dem den zweiten Arm (19) tragenden Schwenkzapfen (21) gekoppelt ist, umfasst, und dass die zweite Antriebsverbindung (43) die Kurbel (54) und die Verbindungsstange (48) aufweist sowie eine Schwinge (56), die zwischen der Verbindungsstange (48) und einem Ende eines zweiten Endorgans (45), dessen anderes Ende mit dem den zweiten Arm (19) tragenden Schwenkzapfen (21) gekoppelt ist, verschwenkbar ist.

9. Scheibenwischeranlage nach Anspruch 8, dadurch gekennzeichnet, dass die Schwinge (56) der zweiten Antriebsverbindung (43) an einer Stelle (52) an der Verbindungsstange (48) angelenkt ist, die sich von der Anlenkstelle (51) der Verbindungsstange (48) und des End-Übertragungsorgans (44) der ersten Antriebsverbindung (42) unterscheidet.

## Revendications

1. Dispositif d'essuie-glace (31) pour un véhicule automobile (17), comprenant des premier et second bras mobiles en rotation (20, 19) portant des lames d'essuie-glace (28, 26) respectives pour essuyer des zones (29, 27) respectives du pare-brise (18) du véhicule automobile, situées respectivement devant le siège de conducteur et le siège de passager adjacent; et un moyen formant moteur électrique (23) couplé respectivement à chacun desdits bras (20, 19) par un premier système de liaisons (76) et un second système de liaisons (41); caractérisé en ce que ledit second système de liaisons (41) comprend deux liaisons d'entraînement (42 et 43) destinées à coupler le moyen formant moteur électrique (23) au second bras mobile en rotation (19) dans l'un ou l'autre d'un premier et d'un second état dans lesquels lesdites liaisons d'entraînement (42 et 43) provoquent l'oscillation de la lame d'essuie-glace (26) dudit second bras (19) sur une première et une seconde zone angulaire (figure 1; figure 2) ayant respectivement un chevauchement minimal et un chevauchement maximal avec la zone (29) essuyée par la lame (28) du premier bras (20), et en ce qu'un dispositif de commutation (32) est capable d'actionner sélectivement l'une ou l'autre des liaisons d'entraînement (42, 43), afin de faire osciller le second bras mobile en rotation (19) dans le premier ou le second état respectif.

2. Dispositif d'essuie-glace selon la revendication 1, caractérisé en ce qu'il comprend en outre un moyen (38) formant capteur de position approprié pour capter la présence desdits bras (20, 19) à une position de référence prédéterminée, et pour permettre aux liaisons d'entraînement (42, 43) de se déplacer du premier au second état et vice versa, lorsque lesdits bras (20, 19) sont dans ladite position de référence.

3. Dispositif d'essuie-glace selon la revendication 1 ou la revendication 2, caractérisé en ce que ledit dispositif de commutation (32) est conçu pour actionner l'une ou l'autre des liaisons d'entraînement (42, 43) par l'intermédiaire d'un dispositif actionneur (46).

4. Dispositif d'essuie-glace selon la revendication 3, dans lequel ledit moyen formant moteur (23) comprend un moteur électrique (23), et dans lequel le second bras (19) est relié à un pivot de support de bras (21) mobile en rotation autour d'un axe fixe et couplé à l'arbre de sortie du moteur électrique (23) par ledit second système de liaisons (41); caractérisé en ce que lesdites première et seconde liaisons d'entraînement (42, 43) comprennent des mécanismes de manivelles respectifs comportant des pluralités respectives d'organes de transmission (54, 48, 44; 54, 48, 56, 45) pouvant pivoter mutuellement et dont les organes de transmission terminaux (44, 45) peuvent être couplés sélectivement, en position de repos ou connectés en rotation, au pivot de support de bras (21) du second bras (19) au moyen dudit dispositif actionneur (46); le dispositif actionneur (46) pouvant prendre sélectivement un premier et un second état dans lesquels ledit pivot de support de bras (21) est relié respectivement à l'organe de transmission terminal (44; 45) de la première ou de la seconde liaison d'entraînement (43; 42), et en même temps, l'accouplement entre ledit pivot de support de bras (21) et l'organe terminal (45; 44) respectivement de la seconde et de la première liaison d'entraînement (43; 42) entre dans sa position de repos.

5. Dispositif d'essuie-glace selon la revendication 4, caractérisé en ce que lesdits organes de transmission terminaux (44; 45) des première et seconde liaisons d'entraînement (42; 43) sont des bielles comportant des ouvertures (60; 61) respectives à une extrémité à travers lesquelles le pivot (21) qui porte ledit second bras (19) s'étend, et l'actionneur (46) comprend un organe d'accouplement (64) mobile en rotation avec ledit pivot (21) et pouvant se translater longitudinalement dans une cavité axiale située dans ledit pivot (21, 58) entre une première et une seconde position dans lesquelles il peut coupler ledit pivot (21) en rotation respectivement avec l'organe terminal (44; 45) de la première ou de la seconde liaison d'entraînement (42; 43).

6. Dispositif d'essuie-glace selon la revendication 5, caractérisé en ce que ledit organe d'accouplement (64) comporte au moins une saillie radiale (65) qui s'étend avec un jeu axial à travers une fente longitudinale (59) située dans ledit pivot (21, 58), et qui peut être introduite sélectivement dans une encoche correspondante (62; 63) située respectivement dans l'ouverture d'extrémité (60; 61) de l'organe terminal (44; 45) de la première ou de la seconde liaison d'entraînement (42; 43).

7. Dispositif d'essuie-glace selon la revendication 6, caractérisé en ce que ledit dispositif actionneur (46) comprend un électro-aimant (66) avec un noyau mobile (68) auquel ledit organe d'accouplement (64) est relié.

8. Dispositif d'essuie-glace selon l'une quelconque des revendications précédentes 4 à 7, caractérisé en ce que ladite première liaison d'entraînement (42) comprend une manivelle (54) mobile en rotation par ledit moteur électrique (23), une tige de connexion (48) comportant une première extrémité que fait pivoter la manivelle (54), et un premier organe terminal (44) dont une extrémité pivote par rapport à la tige de connexion (48) et dont l'autre extrémité est couplée au pivot (21) qui porte ledit second bras (19); et en ce que ladite seconde liaison d'entraînement (43) comprend ladite manivelle (54) et ladite tige de connexion (48), et une bielle (56) pivotant entre ladite tige de connexion (48) et une extrémité d'un second organe terminal (45) dont l'autre extrémité est couplée au pivot (21) qui porte ledit second bras (19) .

9. Dispositif d'essuie-glace selon la revendication 8, caractérisé en ce que ladite bielle (56) de la seconde liaison d'entraînement (43) pivote par rapport à ladite tige de connexion (48) à un point différent (52) du point de pivotement (51) de ladite tige de connexion (48) et de l'organe de transmission terminal (44) de la première liaison d'entraînement (42).
